# EUROPEAN PATENT SPECIFICATION

(11) **EP 3 201 382 B1**
(45) Date of publication and mention of the grant of the patent: **26.08.2020**
(21) Application number: 15847434.6
(22) Date of filing: 30.09.2015
(51) Int. Cl.: D01F 8/10, B01D 39/16, D06M 15/263, D06M 15/233

(54) **FILTER MEDIA CONTAINING A STYRENE-COPOLYMER**
STYROLCOPOLYMER-HALTIGE FILTERMEDIEN
MILIEUX FILTRANTS CONTENANT UN COPOLYMÈRE DU STYRÈNE

(30) Priority: 01.10.2014 US 201462058271 P
(43) Date of publication of application: 09.08.2017
(73) Proprietor: Donaldson Company, Inc., Minneapolis, MN 55440-1299 (US)
(72) Inventor: SHENOY, Suresh Laxman, Bloomington, MN 55437 (US)
(74) Representative: Potter Clarkson
(86) International application number: PCT/US2015/053167
(87) International publication number: WO 2016/054172

(56) References cited:
- EP-A1- 2 336 403
- JP-A- 2009 185 396
- US-A- 4 568 722
- US-A- 6 037 057
- US-A1- 2004 084 796
- US-A1- 2006 093 819
- US-A1- 2013 168 323
- US-A1- 2013 168 323
- US-B2- 7 309 372

## Description

### Cross-reference to Related Applications

The present application claims priority to U.S. Provisional Application Serial No. 62/058,271, filed on October 1, 2014.

### Background

In certain environments of liquid filtration, particularly in oil filtration, chemical resistance is required.

### Summary

The invention is set out in the appended set of claims. The present disclosure provides fibers, filter media, and filter elements, particularly for liquid filtration applications. Such fibers, filter media, and filter elements include a styrene-containing copolymer, particularly a styrene-maleic anhydride copolymer, a styrene-maleimide copolymer, a styrene-maleic acid ester copolymer, or a combination thereof (i.e., a mixture or blend thereof). Due to the presence of the styrene-containing copolymer, the fibers, filter media, and filter elements are rendered more chemically resistant, e.g., to hot glycols.
In certain embodiments of the present disclosure, the fibers are multi-component (e.g., bicomponent) fibers that include a styrene-containing copolymer selected from a styrene-maleic anhydride copolymer, a styrene-maleimide copolymer, a styrene-maleic acid ester copolymer, and a combination thereof. For example, the styrene-containing copolymer may be present in the outermost sheath of a core-sheath bicomponent fiber, or it may be present in one side of a side-by-side bicomponent fiber. Alternatively (or additionally), the styrene-containing copolymer may be present in a coating on an underlying fiber, which itself may be a multi-component fiber optionally including a styrene-containing copolymer selected from a styrene-maleic anhydride copolymer, a styrene-maleimide copolymer, a styrene-maleic acid ester copolymer, and a combination thereof.

In certain embodiments of the present disclosure, the fibers are multi-component (e.g., bicomponent) fibers that include a core and an outermost sheath including a styrene-containing copolymer selected from a styrene-maleic anhydride copolymer, a styrene-maleimide copolymer, a styrene-maleic acid ester copolymer, and a combination thereof. In certain embodiments, the core includes a condensation polymer. In certain embodiments, the condensation polymer of the core is selected from an aromatic polyester, an aliphatic polyester, an aromatic polyamide, an aliphatic polyamide, and a combination thereof (i.e., a mixture, a blend, or a copolymer thereof).

In certain embodiments of the present disclosure, the fibers are side-by-side fibers including a styrene-containing copolymer selected from a styrene-maleic anhydride copolymer, a styrene-maleimide copolymer, a styrene-maleic acid ester copolymer, and a combination thereof.

In certain embodiments, the multi-component fibers of the present disclosure are used in a filter medium that includes an optional support layer.

In certain embodiments, a filter medium of the present disclosure includes: a filter layer including multi-component binder fibers; and an optional support layer; wherein each multi-component binder fiber includes a core and an outermost sheath including a styrene-containing copolymer selected from a styrene-maleic anhydride copolymer, a styrene-maleimide copolymer, a styrene-maleic acid ester copolymer, and a combination thereof.

As mentioned above, individual fibers may have thereon a coating that includes a styrene-containing copolymer selected from a styrene-maleic anhydride copolymer, a styrene-maleimide copolymer, a styrene-maleic acid ester copolymer, and a combination thereof. Alternatively (or additionally) to individually coated fibers, a filter layer of fibers (e.g., in a pre-made web) may have a coating thereon that includes a styrene-containing copolymer selected from a styrene-maleic anhydride copolymer, a styrene-maleimide copolymer, a styrene-maleic acid ester copolymer, and a combination thereof.

In certain embodiments, a filter medium of the present disclosure includes: a filter layer including multi-component binder fibers; and an optional support layer; wherein the multi-component binder fibers have a coating thereon including a styrene-containing copolymer selected from a styrene-maleic anhydride copolymer, a styrene-maleimide copolymer, a styrene-maleic acid ester copolymer, and a combination thereof.

In certain embodiments, a filter medium of the present disclosure includes: a filter layer including multi-component binder fibers; and an optional support layer; wherein the filter layer includes a coating including a styrene-containing copolymer selected from a styrene-maleic anhydride copolymer, a styrene-maleimide copolymer, a styrene-maleic acid ester copolymer, and a combination thereof.

In certain embodiments, the filter medium includes a support layer. A support layer is typically necessary when forming a pleated filter element. In certain embodiments, the support layer includes fibers having an average diameter of at least 5 microns, and in certain embodiments at least 10 microns. In certain embodiments, the support layer has a stiffness of 100 grams or more, and in certain embodiments, 300 grams or more.

In certain embodiments of the present disclosure, there is provided a filter element, particularly a liquid filter element, that includes a housing and a fibrous filter medium as described herein.

In certain embodiments of the present disclosure, there is provided a method of filtering liquid, the method including directing the liquid through a filter medium or filter element as described herein.

Herein, the following definitions are used:
The term "glycol-degradable" refers to polymers or fibers that dissolve or degrade (e.g., form cracks) in ethylene glycol over a period of time (e.g., 1-3 days), or in certain preferred embodiments, glycol-degradabe polymers or fibers dissolve or degrade in hot (150°C) ethylene glycol over a period of time (e.g., 1-3 days) according to the Hot Glycol Soak Test described in the Examples Section.
The term "multi-component fibers" refers to fibers formed from at least two polymers in one fiber. The term "bicomponent fibers" refers to fibers formed from at least two polymers in one fiber. For example, one component may be in the form of a coating on an underlying mono-component fiber. Another example of a bicomponent fiber includes two polymers arranged in substantially constantly positioned distinct zones across the cross-section of the bicomponent fiber and extending continuously along the length of the bicomponent fiber. The configuration of such a bicomponent fiber may be, for example, a core-sheath configuration wherein one polymer is surrounded by another, or a side-by-side configuation. For two component fibers, the polymers may be present in ratios of 75/25, 50/50, 25/75, or any other desired ratios. Conventional additives, such as pigments and surfactants, may be incorporated into one or both polymer streams, or applied to the filament surfaces.
The term "polymer" includes, but is not limited to, organic homopolymers, copolymers, such as for example, block, graft, random and alternating copolymers, terpolymers, etc., and blends and modifications thereof. Furthermore, unless otherwise specifically limited, the term "polymer" shall include all possible geometrical configurations of the material. These configurations include, but are not limited to, isotactic, syndiotactic, and atactic symmetries.
The terms "comprises" and variations thereof do not have a limiting meaning where these terms appear in the description and claims. Such terms will be understood to imply the inclusion of a stated step or element or group of steps or elements but not the exclusion of any other step or element or group of steps or elements. By "consisting of' is meant including, and limited to, whatever follows the phrase "consisting of." Thus, the phrase "consisting of' indicates that the listed elements are required or mandatory, and that no other elements may be present. By "consisting essentially of' is meant including any elements listed after the phrase, and limited to other elements that do not interfere with or contribute to the activity or action specified in the disclosure for the listed elements. Thus, the phrase "consisting essentially of' indicates that the listed elements are required or mandatory, but that other elements are optional and may or may not be present depending upon whether or not they materially affect the activity or action of the listed elements.
The words "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the disclosure.
The terms "a," "an," and "the" are not intended to refer to only a singular entity, but include the general class of which a specific example may be used for illustration. The terms "a," "an," and "the" are used interchangeably with the term "at least one."
The phrases "at least one of' and "comprises at least one of' followed by a list refers to any one of the items in the list and any combination of two or more items in the list.
The term "or" is generally employed in its usual sense including "and/or" unless the content clearly dictates otherwise. The term "and/or" means one or all of the listed elements or a combination of any two or more of the listed elements.

Also herein, all numbers are assumed to be modified by the term "about" and preferably by the term "exactly." As used herein in connection with a measured quantity, the term "about" refers to that variation in the measured quantity as would be expected by the skilled artisan making the measurement and exercising a level of care commensurate with the objective of the measurement and the precision of the measuring equipment used.

Also herein, the recitations of numerical ranges by endpoints include all numbers subsumed within that range as well as the endpoints (e.g., 1 to 5 includes 1, 1.5, 2, 2.75, 3, 3.80, 4, 5, etc.). Herein, "up to" a number (e.g., up to 50) includes the number (e.g., 50).

Reference throughout this specification to "one embodiment," "an embodiment," "certain embodiments," or "some embodiments," etc., means that a particular feature, configuration, composition, or characteristic described in connection with the embodiment is included in at least one embodiment of the disclosure. Thus, the appearances of such phrases in various places throughout this specification are not necessarily referring to the same embodiment of the disclosure. Furthermore, the particular features, configurations, compositions, or characteristics may be combined in any suitable manner in one or more embodiments.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Drawings

The disclosure may be more completely understood in connection with the following drawings.
Figures 1(A)-(C) are SEMs that show the effect of a Hot Glycol Soak Test on uncoated media.
Figures 2(A)-(F) are SEMs that show the effect of a Hot Glycol Soak Test on media coated with a styrene-containing copolymer.

### Detailed Description of Illustrative Embodiments

The present disclosure provides fibers, filter media, and filter elements, particularly for liquid filtration applications. Such fibers, filter media, and filter elements include a styrene-containing copolymer, particularly a styrene-maleic anhydride copolymer, a styrene-maleimide copolymer, a styrene-maleic acid ester copolymer, or a combination thereof (e.g., blend or mixture of such copolymers).

The styrene-containing copolymer may be incorporated into or onto the fibers or filter media in a variety of ways. When the fibers or filter media include fiber components that are subject to degradation or dissolution under certain conditions the styrene-containing copolymer provides more chemical resistance. For example, the styrene-containing copolymer may be incorporated into fibers (e.g., as an outermost sheath in a core-sheath fiber arrangement or as one component of a side-by-side bicomponent fiber), that include one or more glycol-degradable polymers.

Due to the presence of the styrene-containing copolymer, the fibers are rendered more chemically resistant, e.g., to hot glycols, than if the styrene-containing copolymer is not present. By this, it is meant that fibers containing the styrene-containing copolymer (e.g., as a primary component of the fibers, such as the core or sheath component or as at least one of a side-by-side fiber component) generally hold their shape, and are not completely physically degraded or broken apart due to the dissolution or degradation of the glycol-degradable polymer components.

As another example, if the styrene-containing copolymer is a coating on a fiber or fiber layer that includes one or more glycol-degradable fibers, it will render the underlying fiber or fiber layer more chemically resistant (e.g., to hot glycols). By this, it is meant that the underlying fibers or fiber layer is more resistant to degradation or dissolution or otherwise falling apart compared to the same fiber or fiber layer without the presence of the styrene-containing copolymer coating.

As another example, fibers containing the styrene-containing copolymer can be blended with other glycol-degradable fibers that do not include the styrene-containing copolymer and that are subject to degradation or dissolution (e.g., to hot glycols). When subjected to conditions that degrade the glycol-degradable fibers, although the degradable fibers may degrade, the styrene-containing copolymer will not. Thus, the structure of the blended fibrous material will more readily maintain its integrity, at least to a limited extent, compared to the same fibrous material without the fibers containing the styrene-containing copolymer.

As such, the fibers and fiber layers and filter media are suitable for use in filtering liquids such as oils and hydraulic fuels.

In one embodiment, the fibers are multi-component (e.g., bicomponent) fibers that include a core and an outermost sheath including a styrene-containing copolymer. In particular, the styrene-containing copolymer is selected from a styrene-maleic anhydride copolymer, a styrene-maleimide copolymer, a styrene-maleic acid ester copolymer, and a mixture thereof. The core is typically a glycol-degradable material (although this is not a necessary requirement), such as a condensation polymer (e.g., polyester), that is protected by the outermost sheath containing the styrene-containing copolymer. The sheath can also include a glycol-degradable material blended with the styrene-containing copolymer. In such embodiments, the styrene-containing copolymer is typically present in the blend in an amount of greater than or equal to 40% by weight, based on the total weight of the blend.

In one embodiment, the fibers are multi-component (e.g., bicomponent) fibers that include a side-by-side configuration that includes a styrene-containing copolymer. In particular, the styrene-containing copolymer is selected from a styrene-maleic anhydride copolymer, a styrene-maleimide copolymer, a styrene-maleic acid ester copolymer, and a mixture thereof. Another component of the side-by-side fibers is typically a glycol-degradable material, such as a condensation polymer (e.g., a polyester). The presence of the styrene-containing copolymer component under conditions that degrade the glycol-degradable material allow for the fibers to generally hold their shape, and not completely physically degrade or break apart.

In one embodiment, the styrene-containing copolymer is a coating on individual fibers. The underlying fibers may be mono-component or muti-component (e.g., bicomponent) fibers including co-extruded side-by-side or core-sheath fibers. The underlying fibers may or may not also include a styrene-containing copolymer. For example, the underlying fibers may include a side-by-side arrangement of a glycol-degradable polymer and a polymer that is not glycol-degradable (i.e., a glycol-resistant polymer, which may be a styrene-containing copolymer), which is coated with a styrene-containing copolymer. The underlying fibers may also include core-sheath fibers wherein the sheath includes a glycol-degradable polymer (the core may be glycol-degradable or not) and an over-coating that includes a styrene-containing copolymer.

Regardless of the orientation of the fibers and the position of the styrene-containing copolymer (e.g., in a side-by-side fiber, in a core-sheath fiber, or as a coating), the styrene-containing copolymer may be blended with one or more other polymers (e.g., a glycol-degradable polymer). In such embodiments, the styrene-containing copolymer is typically present in the blend in an amount of greater than or equal to 40% by weight, based on the total weight of the blend.

In certain embodiments of the present disclosure, there is provided a filter medium that includes: a filter layer that includes multi-component binder fibers (which may or may not include a styrene-containing copolymer); and an optional support layer; wherein the filter layer includes a coating that includes a styrene-containing copolymer selected from a styrene-maleic anhydride copolymer, a styrene-maleimide copolymer, a styrene-maleic acid ester copolymer, and a combination thereof. The coating may be on the filter layer or on the individual fibers, particularly the fibers that are subject to degradation under conditions that do not degrade the styrene-containing copolymer.

Filter media that include blends of fibers or layers of fibrous webs are also within the scope of the present disclosure. For example, fibers that include a styrene-containing copolymer selected from a styrene-maleic anhydride copolymer, a styrene-maleimide copolymer, a styrene-maleic acid ester copolymer, and a combination thereof may be blended with other fibers that do not include such styrene-containing copolymer (e.g., cellulosic fibers, glass fibers, metal fibers, or synthetic polymeric fibers that do not include such styrene-containing copolymer, or a combination thereof). Also, a fibrous web of stryene-containing copolymer fibers may be layered with, or attached to (e.g., laminated to), a fibrous web that does not include styrene-containing copolymer fibers as described herein (e.g., a fibrous web that includes cellulosic fibers, glass fibers, metal fibers, or synthetic polymeric fibers that do not include such styrene-containing copolymer, or a combination thereof).

Examples of styrene-maleic anhydride copolymers are commercially available from Cray Valley Products and Polyscope Polymers BV under the names SMA Resins and Xiran, respectively.

Examples of styrene-maleimide copolymers are commercially available from Cray Valley Products under the name SMA Imide Resins.

Examples of styrene-maleic acid ester copolymers are commercially available from Cray Valley Products under the name SMA Ester Resins.

Various combinations of such styrene-containing copolymers can be used in the same fiber or in different fibers, in the same layer or in different layers, in the same coating or in diffferent coatings, if desired.

In certain embodiments, the fibers can be core-sheath fibers or side-by-side fibers that include a styrene-containing copolymer and a condensation polymer. If the styrene-containing copolymer is in the sheath, it is particularly effective in providing protection for the condensation polymer in the core. In certain embodiments, the condensation polymer of the core is selected from an aromatic polyester, an aliphatic polyester, an aromatic polyamide, an aliphatic polyamide, and a combination thereof (i.e., a mixture, a blend, or a copolymer thereof). In certain embodiments, the core includes an aromatic or aliphatic polyester having a melting point of at least 110°C.

In certain embodiments, the outermost sheath of the core-sheath fibers includes a blend of a condensation polymer and the styrene-containing copolymer. Typically, the styrene-containing copolymer is present in the blend in an amount of greater than or equal to 40% by weight, based on the total weight of the blend. In certain embodiments, the condensation polymer of the outermost sheath is selected from an aromatic polyester, an aliphatic polyester, an aromatic polyamide, an aliphatic polyamide, and a combination thereof (i.e., a blend, mixture, or copolymer thereof). In certain embodiments, the outermost sheath includes an aromatic or aliphatic polyester having a melting point of at least 110°C.

As discussed above, in certain embodiments, fibers or fiber layers can include a coating (as opposed to a co-extruded sheath or side-by-side component of a fiber) of the styrene-containing copolymer. Such copolymer may be coated on degradable mono- or multi-component fibers or fiber layers that include a glycol-degradable material.

For example, such multi-component fibers, typically bicomponent fibers, may include bicomponent fibers that are core-sheath fibers having a low melting point polymer (e.g., a condensation polymer such as polyester) sheath and a higher melting point polymer (e.g., a condensation polymer such as polyester) core. The lower melting point polymer may provide binding capability for other fibers (e.g., glass-containing fibers) mixed with them. Such binder fibers typically have fiber diameters of at least 10 microns and are included in a web to bind other fibers, e.g., glass-containing fibers, together. In certain embodiments, the highre melting point polymer may or may not be glycol-degradable, but the lower melting point polymer of the sheath is glycol-degradable, which is protected from degradation under certain conditions by the styrene-containing copolymer coating.

In one embodiment, a filter layer that includes binder fibers is coated with a styrene-containing copolymer. In one such embodiment, the binder fibers include a low melting point polyester sheath and a higher melting point polyester core. Such filter layer may also include polyester fibers other than the multi-component fibers and glass-containing fibers. If present, glass fibers having an average diameter of less than 2 microns, and in certain embodiments less than 1 micron, can be used. In certain embodiments, the glass fibers have an average diameter of at least 0.01 micron, in certain embodiments at least 0.1 micron.

In certain embodiments, the binder fibers in the filter layer are used to avoid the use of any binder resin; however, such resin can be added to further improve its strength. Examples of suitable binder resins include solvent-based or water-based latex resins, water-based styrene acrylics, solvent-based phenolics, and solvent-based non-phenolics, such as that available under the tradename HYCAR 26138 from Lubrizol of Cleveland, OH. Typically, if used, a binder resin could be present in the filter layer in an amount of up to 1 wt-%, up to 5 wt-%, or up to 10 wt-%, based on the total weight of the filter layer. Preferably, no binder resin is used in the filter layer (or in any of the layers of the filter media). Examples of such filter layers include those described in U.S. Patent Nos. 7,309,372, 7,314,497, 7,985,344, 8,057,567, and 8,268,033, and U.S. Publication Nos. 2006/0242933 and 2008/0245037.

Methods of coating a styrene-containing copolymer on individual fibers or a fiber-containing layer, such as a filter layer, are conventional and well known to those skilled in the art. For example, dip coating, emulsion coating, spray coating, gravure coating, and other methods known in the art can be used. Solvents that solubilize or emulsify the styrene-containing copolymer, such as alcohols (e.g., ethanol), esters (e.g., methyl ethyl ketone), cyclic ethers (e.g., tetrahydrofuran, dioxane), may be used in a coating process. A typical coating weight is at least 0.5 wt-% and often no more than 3 wt-%, wherein the weight percent is of the polymer in the solvent. Higher amounts can be used, but may affect permeability of the resulting fiber layer, e.g., by filming in pores of the media.

A styrene-containing copolymer filter layer (e.g., core-sheath fibers with a styrene copolymer-containing sheath, or glycol-degradable fibers or glycol-degradable filter layer with a styrene copolymer-containing coating thereon) can be used with a variety of other filter layers and/or support layers, such as a spunbond layers and melt-blown filter layers. Each filter layer and support layer can be a composite of multiple layers. For example, a melt-blown filter layer can be a composite of two or more different layers of melt-blown fibers, either differing in composition and/or fiber diameter. The relative orientation of such layers can vary depending on the use of the composite medium.

In certain embodiments, the filter media also include a support layer (i.e., substrate). This allows for the filter media to be corrugatable and/or pleatable. The support layer may be positioned either upstream or downstream of the styrene-containing copolymer filter layer relative to the fluid (e.g., liquid, gas) flow through the filter. The support layer can be of any of a variety of porous materials, including fibrous materials, metal mesh, etc. Typically, fibrous materials used for the support layer are made of natural fiber and/or synthetic fibers. In certain embodiments, the support layer includes fibers having an average diameter of at least 5 microns, or at least 10 microns. In certain embodiments, the support layer can include fibers having an average diameter of up to 250 microns. In certain embodiments, the support layer is at least 0.005 inch (125 microns) thick, and often at least 0.01 inch (250 microns) thick. In certain embodiments, the support layer is up to 0.03 inch (750 microns) thick. In certain embodiments, the support layer has a Gurley stiffness of 100 grams or more.

Examples of suitable material for the support layer (i.e., substrate) include spunbond, wetlaid, carded, or melt-blown nonwoven. Suitable fibers can be cellulosic fiber, glass fibers, metal fibers, or synthetic polymeric fibers or the combination. Fibers can be in the form of wovens or nonwovens. Plastic or metal screen-like materials both extruded and hole punched, are other examples of filter substrates. Examples of synthetic nonwovens include polyester nonwovens, nylon nonwovens, polyolefin (e.g., polypropylene) nonwovens, polycarbonate nonwovens, or blended or multicomponent nonwovens thereof. Sheet-like substrates (e.g., cellulosic, synthetic, and/or glass or combination webs) are typical examples of filter substrates. Other preferred examples of suitable substrates include polyester or bicomponent polyester fibers (as described herein for the glass-containing layer) or polypropylene/polyethylene terephthalate, or polyethylene/ polyethylene terephthalate bicomponent fibers in a spunbond.

The thicknesses of each of the filter and support layers may be the same or different. It is noted that thickness has an effect on filtration properties. The overall thickness of the media is desirably minimized without significantly affecting the other media properties, such as dust loading capacity, efficiency, and permeability. This allows for more pleats in an element, for example, preferably such that a filter element includes a maximum amount of media without adversely affecting the filter element properties and performance (e.g., efficiency, pressure drop, or dust loading capacity).

In certain embodiments, a scrim can be used to create a layer downstream from the glass-containing layer to capture any glass fibers released from the glass-containing layer for preventing or reducing introduction of glass fibers into the filtered fluid. Useful materials for the scrim (i.e., filtration layer for the glass fibers) typically have a high permeability (i.e., "perm") (e.g., greater than 1600 1/m²/s) and are thin (e.g., less than 0.0127 cm (0.005 inch)) so there is a minimal effect on the flat sheet or filter element performance. Examples of such scrim materials include those available under the tradenames FINON C303NW and FINON C3019 NW from Midwest Filtration in Cincinatti, OH. Others are described, for example, in U.S. Pat. Pub. 2009/0120868.

Typically, in a filter medium of the present disclosure, the filter layers, and preferably, the filter and support layers are adhered together with an adhesive, through thermal bonding or ultrasonic bonding, through the use of binder fibers, or using a combination of such techniques. Preferred methods include the use of an adhesive, binder fibers, or a combination thereof. A particularly preferred method is through the use of an adhesive (pressure sensitive adhesives, hot melt adhesives) applied in a variety of techniques, including, for example, powder coating, spray coating, or the use of a pre-formed adhesive web. Typically, the adhesive is in a continuous layer, or it can be patterned if so desired as long as the filter medium does not delaminate during processing or use. Exemplary adhesives include hot melt adhesives such as polyesters, polyamides, acrylates, or combinations thereof (blends or copolymers).

If an adhesive is used, the amount of adhesive can be readily determined by one of skill in the art. A desired level is one that provides suitable bonding between the layers without adversely impacting the fluid flow through the media.

In order to increase rigidity and provide better flow channel in an element, a filter medium can be corrugated. Thus, preferred filter media of the present disclosure should have the characteristics to survive a typical hot corrugation process without media damage (which often deteriorate the media performance). Preferred filter media should also have the ability to maintain the depth of the corrugations (e.g., 0.020-0.035 inch, 0.5 mm to 0.9 mm) through further processing, storage, transportation, and use. Typically, there should not be more than 20% reduction in corrugation depth, or not more than 30% reduction in corrugation depth, or not more than 50% reduction in corrugation depth, after the corrugations are formed (as a result of handling during further processing, storage, transportation, and use). These properties are typically related to media composition, as well as material strength and stiffness.

With or without the corrugation, a filter medium can be folded into multiple folds or pleats and then installed in a filter housing or frame. Pleating of a flat sheet or corrugated sheet can be carried out using any number of pleating techniques, including but not limited to, rotary pleating, blade pleating, and the like. The corrugated media may have any one of several pleat supporting mechanisms applied to the pleated media as described in U.S. Patent No. 5,306,321. For a noncorrugated media, other pleat separation methods can be used on any of the media described herein, such as those involving the addition of a hot-melt adhesive bead between the pleats, or the use of comb separators. The pleated material can be formed into a cylinder or "tube" and then bonded together, such as through the use of an adhesive (e.g., a urethane-based, hot-melt adhesive, etc.), or ultrasonic welding, for example.

In particular uses, the filter media of the present disclosure that include a styrene-containing copolymer are preferably used in liquid filtration systems (e.g., for filtering oils and fuels, such as hydraulic fuels), although they can be used in a variety of air filtration systems. They are particularly suitable for use with compressor filter systems.

The filter media of the present disclosure can be manufactured into filter elements (i.e., filtration elements), including, e.g., flat-panel filters, cartridge filters, or other filtration components. Examples of such filter elements are described in U.S. Patent Nos. 6,746,517; 6,673,136; 6,800,117; 6,875,256; 6,716,274; and 7,316,723. The filter media can be corrugated. Exemplary corrugations are at a depth of 0.020 to 0.035 inch (0.5 mm to 0.9 mm). Corrugated filter media can then typically be pleated to form a pleat pack, then placed and sealed into a housing, as is known in the art.

### Examples

Objects and advantages of this disclosure are further illustrated by the following examples, but the particular materials and amounts thereof recited in these examples, as well as other conditions and details, should not be construed to unduly limit this disclosure.

### Media Preparation

Media handsheets were prepared such that the weight composition of the polyester bicomponent fibers and the glass fibers were equal (50/50). For the handsheets, the polyester fiber included a polyester core and a TEIJIN copolyester higher temperature sheath (Tm = 150°C) of the type available as TJ04BN bicomponent PET fibers from Teijin (Osaka, Japan). The glass fibers used were Lauscha B04 glass fibers from Lauscha Fiber Interanational (Lauscha, Germany). The media was prepared in a manner similar to that of Example 6 in U.S. Pat. No. 7,314,497 (using any commercially available surfactant (e.g., soap) to help disperse and suspend the fibers in cold tap water). The handsheets were pressed and heated to 137.8°C (280°F) for 10 minutes before being ready for use.

### Hot Gycol Soak Test

Samples of coated and uncoated media handsheets cut in the form of rectangles (7.62 cm (3 inches) x 10.16 (4 inches)) were dipped in ethylene glycol in an aluminum reaction vessel. The vessel had a sturdy top with a gasket to prevent leaks. However, a vent in the form of a small opening was provided to minimize buildup of pressure. The vessel with the samples was then placed in an oven heated to 150°C. To prevent cross contamination, coated and uncoated (control) samples were treated separately. Samples were taken out of the vessel at regular intervals (1, 3 days, etc.), rinsed with water and if necessary with alcohol, followed by oven drying. The samples were then observed using a scanning electron microscope (SEM) to track potential fiber degradation.

### Example 1

The media handsheets as described above were coated with a styrene-maleic anhydride polymer. For the coating solution, a styrene-maleic anhydride polymer available under the trade designation SMA 1000 obtained from Cray Valley Products was chosen as the polymer (from Cray Valley Industries). The polymer has a Mw = 5500 grams/mole with a Tg = 155°C and a mole ratio of styrene:maleic anhydride = 1:1 . The polymer was dissolved in a mixture of 50:50 weight ratio of dioxolane and ethanol. The concentration is chosen to be 2% weight/volume. Once the polymer was dissolved, the handsheets (20.32 cm (8 inches) x 20.32 cm (8 inches)) were dip coated by immersing them in the SMA solution until the handsheet was completely wetted. Normally this time ranged from 30 seconds to 1 minute. The wetted handsheets were taken out and air dried overnight and then briefly oven dried at 80°C for 10 minutes. The handsheets were then cut into rectangles (7.62 cm (3 inches) x 10.16 (4 inches)) and subjected to the Hot Glycol Soak Test described above.

### Example 2

Example 1 was repeated except that the Hot Glycol Soak Tests were performed on uncoated media handsheets, which served as the control sample.

### Results

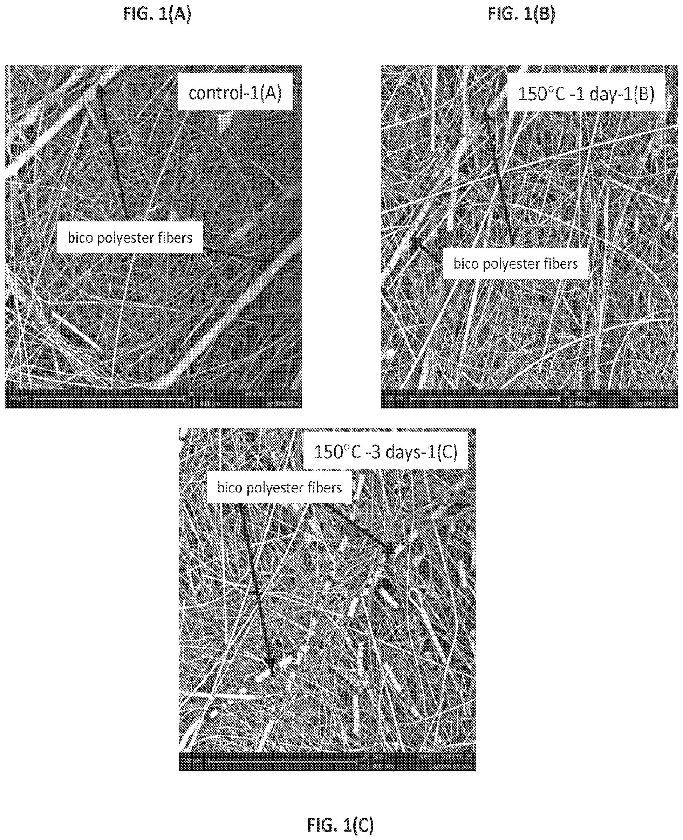

Figure 1 shows the effect of the Hot Glycol Soak Test on the uncoated media. It was observed that media handling after 3 days in hot glycol (150°C) was impossible as it broke apart easily. In particular, SEM images of the soaked and subsequently water/alcohol rinsed media shows the reason for the lack of strength. Figure 1(A) shows the control media while Figure 1(B) and Figure 1(C) show the effect of hot glycol soak on the bicomponent polyester fibers. After one day of soak, fibers exhibited numerous cracks (Figure 1(B)) across the fibers at regular intervals along the length of the bicomponent fibers. The fibers are clearly broken into smaller pieces (Figure 1(C)) after 3 days of hot soak, which explains the lack of media strength resulting in media tearing during handling.

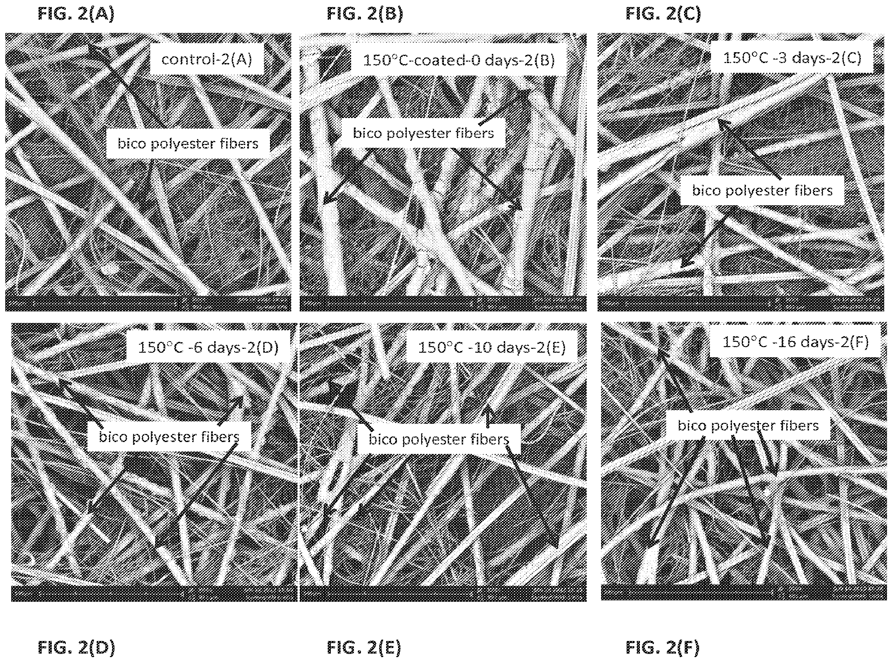

In contrast, the coated media handsheets (coated with SMA 1000 styrene-containing copolymer) shows remarkable stability in hot glycol (Figures 2(A)-2(F)). Figure 2(F) shows no evidence of crack formation or degradation of the coated bicomponent polyester fibers even after 16 days of continuous soaking in hot glycol at 150°C. It is believed that the hot glycol resistance is a direct result of the presence of the SMA1000 styrene-containing copolymer. It should be understood that this disclosure is not intended to be unduly limited by the illustrative embodiments and examples set forth herein and that such examples and embodiments are presented by way of example only with the scope of the disclosure intended to be limited only by the claims set forth herein as follows.

## Claims

1. A filter medium comprising
a filter layer;
and an optional support layer;
wherein the filter layer comprises a multi-component fiber comprising a styrene-containing copolymer selected from a styrene-maleic anhydride copolymer, a styrene-maleimide copolymer, a styrene-maleic acid ester copolymer, and a combination thereof.

2. The filter medium of claim 1 wherein the filter layer further comprises glycol-degradable fibers that do not include the styrene-containing polymer.

3. The filter medium of claim 1 or 2 wherein the multi-component binder fiber are core-sheath bicomponent fibers comprising a core and an outermost sheath comprising a styrene-containing copolymer selected from a styrene-maleic anhydride copolymer, a styrene-maleimide copolymer, a styrene-maleic acid ester copolymer, and a combination thereof, and the filter layer further comprises polyester fibers distinct from the multi-component binder fibers.

4. The filter medium of claim 1 or 2 wherein the styrene-containing copolymer forms a coating on an underlying fiber.

5. A filter medium comprising:
a filter layer comprising multi-component binder fibers; and
an optional support layer;
wherein the filter layer comprises a coating comprising a styrene-containing copolymer selected from a styrene-maleic anhydride copolymer, a styrene-maleimide copolymer, a styrene-maleic acid ester copolymer, and a combination thereof.

6. The filter medium of any of the preceding claims wherein the multi-component fibers comprise bicomponent fibers, wherein the bicomponent fibers are core-sheath fibers.

7. The filter medium of any of the preceding claims wherein the multi-component fibers comprise a core and an outermost sheath comprising the styrene-containing copolymer; optionally blended with one or more glycol-degradable polymer.

8. The filter media of claim 7 wherein the outermost sheath comprises a blend of a condensation polymer and the styrene-containing copolymer, wherein the styrene-containing copolymer is present in the blend in an amount of greater than or equal to 40% by weight, based on the total weight of the blend, optionally wherein the condensation polymer of the outermost sheath is selected from an aromatic polyester, an aliphatic polyester, an aromatic polyamide, an aliphatic polyamide, and a combination thereof.

9. The filter media of claim 7 wherein the core comprises a condensation polymer, optionally wherein the condensation polymer of the core is selected from an aromatic polyester, an aliphatic polyester, an aromatic polyamide, an aliphatic polyamide, and a combination thereof, for example an aromatic or aliphatic polyester having a melting point of at least 110°C.

10. The filter medium of claims 1 or 5 wherein the filter layer comprises the multi-component fiber comprising a side-by-side bicomponent fiber wherein the styrene-containing copolymer is present in at least one side of the fiber.

11. The filter medium of claim 10 wherein the side-by-side fiber further comprises a condensation polymer, optionally wherein the condensation polymer is selected from an aromatic polyester, an aliphatic polyester, an aromatic polyamide, an aliphatic polyamide, and a combination thereof, for example an aromatic or aliphatic polyester having a melting point of at least 110°C.

12. The filter medium of any of the preceding claims wherein the filter layer further comprises glass fibers.

13. A filter element comprising a housing and a filter medium of any of the preceding claims.

14. A method of filtering a liquid, the method comprising directing the liquid through a filter element of claim 13.

## Patentansprüche

1. Filtermedium, umfassend eine Filterschicht; und
eine optionale Trägerschicht;
wobei die Filterschicht eine Mehrkomponentenfaser umfasst, die ein styrolhaltiges Copolymer umfasst, das aus einem Styrol-Maleinsäureanhydrid-Copolymer, einem Styrol-Maleimid-Copolymer, einem Styrol-Maleinsäureester-Copolymer und einer Kombination davon ausgewählt ist.

2. Filtermedium nach Anspruch 1, wobei die Filterschicht ferner glykolabbaubare Fasern umfasst, die das styrolhaltige Polymer nicht enthalten.

3. Filtermedium nach Anspruch 1 oder 2, wobei die Mehrkomponenten-Bindefasern Kern-Mantel-Zweikomponentenfasern sind, die einen Kern und einen äußersten Mantel umfassen, die ein styrolhaltiges Copolymer umfassen, ausgewählt aus einem Styrol-Maleinsäureanhydrid-Copolymer, einem Styrol-Maleimid-Copolymer, einem Styrol-Maleinsäureester-Copolymer und einer Kombination davon, und wobei die Filterschicht ferner Polyesterfasern umfasst, die sich von den Mehrkomponenten-Bindefasern unterscheiden.

4. Filtermedium nach Anspruch 1 oder 2, wobei das styrolhaltige Copolymer eine Beschichtung auf einer darunterliegenden Faser bildet.

5. Filtermedium, umfassend:
eine Filterschicht, die Mehrkomponenten-Bindefasern umfasst; und
eine optionale Trägerschicht;
wobei die Filterschicht eine Beschichtung umfasst, die ein styrolhaltiges Copolymer umfasst, das aus einem Styrol-Maleinsäureanhydrid-Copolymer, einem Styrol-Maleimid-Copolymer, einem Styrol-Maleinsäureester-Copolymer und einer Kombination davon ausgewählt ist.

6. Filtermedium nach einem der vorhergehenden Ansprüche, wobei die Mehrkomponentenfasern Zweikomponentenfasern umfassen, wobei die Zweikomponentenfasern Kern-Mantel-Fasern sind.

7. Filtermedium nach einem der vorhergehenden Ansprüche, wobei die Mehrkomponentenfasern einen Kern und einen äußersten Mantel umfassen, der/die das styrolhaltige Copolymer umfasst/umfassen;
optional mit einem oder mehreren glykolabbaubaren Polymer(en) gemischt.

8. Filtermedium nach Anspruch 7, wobei der äußerste Mantel eine Mischung aus einem Kondensationspolymer und dem styrolhaltigen Copolymer umfasst, wobei das styrolhaltige Copolymer in der Mischung bezogen auf das Gesamtgewicht der Mischung in einer Menge von mindestens 40 Gew.-% oder mehr vorhanden ist, optional wobei das Kondensationspolymer des äußersten Mantels aus einem aromatischen Polyester, einem aliphatischen Polyester, einem aromatischen Polyamid, einem aliphatischen Polyamid und einer Kombination davon ausgewählt ist.

9. Filtermedium nach Anspruch 7, wobei der Kern ein Kondensationspolymer umfasst, optional wobei das Kondensationspolymer des Kerns aus einem aromatischen Polyester, einem aliphatischen Polyester, einem aromatischen Polyamid, einem aliphatischen Polyamid und einer Kombination davon ausgewählt ist, beispielsweise einem aromatischen oder aliphatischen Polyester mit einem Schmelzpunkt von mindestens 110 °C.

10. Filtermedium nach Anspruch 1 oder 5, wobei die Filterschicht die Mehrkomponentenfaser umfasst, die eine Seite-an-Seite-Zweikomponentenfaser umfasst, wobei das styrolhaltige Copolymer in mindestens einer Seite der Faser vorhanden ist.

11. Filtermedium nach Anspruch 10, wobei die Seite-an-Seite-Faser ferner ein Kondensationspolymer umfasst, optional wobei das Kondensationspolymer aus einem aromatischen Polyester, einem aliphatischen Polyester, einem aromatischen Polyamid, einem aliphatischen Polyamid und einer Kombination davon ausgewählt ist, beispielsweise einem aromatischen oder aliphatischen Polyester mit einem Schmelzpunkt von mindestens 110 °C.

12. Filtermedium nach einem der vorhergehenden Ansprüche, wobei die Filterschicht ferner Glasfasern umfasst.

13. Filterelement, umfassend ein Gehäuse und ein Filtermedium nach einem der vorhergehenden Ansprüche.

14. Verfahren zum Filtern einer Flüssigkeit, wobei das Verfahren das Leiten der Flüssigkeit durch ein Filterelement nach Anspruch 13 umfasst.

## Revendications

1. Milieu filtrant comprenant une couche filtrante ; et
une couche de support facultative ;
dans lequel la couche filtrante comprend une fibre à composants multiples comprenant un copolymère contenant du styrène choisi parmi un copolymère styrène-anhydride maléique, un copolymère styrène-maléimide, un copolymère styrène-ester d'acide maléique et une combinaison de ceux-ci.

2. Milieu filtrant selon la revendication 1, dans lequel la couche filtrante comprend en outre des fibres dégradables au glycol qui ne comportent pas le polymère contenant du styrène.

3. Milieu filtrant selon la revendication 1 ou 2, dans lequel les fibres de liant à composants multiples sont des fibres à deux composants âme-gaine comprenant une âme et une gaine la plus extérieure comprenant un copolymère contenant du styrène choisi parmi un copolymère styrène-anhydride maléique, un copolymère styrène-maléimide, un copolymère styrène-ester d'acide maléique et une combinaison de ceux-ci, et la couche filtrante comprend en outre des fibres de polyester distinctes des fibres de liant à composants multiples.

4. Milieu filtrant selon la revendication 1 ou 2, dans lequel le copolymère contenant du styrène forme un revêtement sur une fibre sous-jacente.

5. Milieu filtrant comprenant :
une couche filtrante comprenant des fibres de liant à composants multiples ; et
une couche de support facultative ;
dans lequel la couche filtrante comprend un revêtement comprenant un copolymère contenant du styrène choisi parmi un copolymère styrène-anhydride maléique, un copolymère styrène-maléimide, un copolymère styrène-ester d'acide maléique et une combinaison de ceux-ci.

6. Milieu filtrant selon l'une quelconque des revendications précédentes, dans lequel les fibres à composants multiples comprennent des fibres à deux composants, les fibres à deux composants étant des fibres à gaine centrale.

7. Milieu filtrant selon l'une quelconque des revendications précédentes, dans lequel les fibres à composants multiples comprennent un noyau et une gaine la plus extérieure comprenant le copolymère contenant du styrène ;
éventuellement mélangé avec un ou plusieurs polymères dégradables au glycol.

8. Milieu filtrant selon la revendication 7, dans lequel la gaine la plus extérieure comprend un mélange d'un polymère de condensation et du copolymère contenant du styrène, dans lequel le copolymère contenant du styrène est présent dans le mélange en une quantité supérieure ou égale à 40 % en poids, sur la base sur le poids total du mélange, éventuellement dans lequel le polymère de condensation de la gaine la plus extérieure est choisi parmi un polyester aromatique, un polyester aliphatique, un polyamide aromatique, un polyamide aliphatique et une combinaison de ceux-ci.

9. Milieu filtrant selon la revendication 7, dans lequel le noyau comprend un polymère de condensation, éventuellement dans lequel le polymère de condensation du noyau est choisi parmi un polyester aromatique, un polyester aliphatique, un polyamide aromatique, un polyamide aliphatique et une combinaison de ceux-ci, par exemple un polyester aromatique ou aliphatique ayant un point de fusion d'au moins 110 °C.

10. Milieu filtrant selon les revendications 1 ou 5, dans lequel la couche filtrante comprend la fibre à composants multiples comprenant une fibre à deux composants côte à côte dans laquelle le copolymère contenant du styrène est présent dans au moins un côté de la fibre.

11. Milieu filtrant selon la revendication 10, dans lequel la fibre côte à côte comprend en outre un polymère de condensation, éventuellement dans lequel le polymère de condensation est choisi parmi un polyester aromatique, un polyester aliphatique, un polyamide aromatique, un polyamide aliphatique et une combinaison de ceux-ci, par exemple un polyester aromatique ou aliphatique ayant un point de fusion d'au moins 110 °C.

12. Milieu filtrant selon l'une quelconque des revendications précédentes, dans lequel la couche filtrante comprend en outre des fibres de verre.

13. Elément filtrant comprenant un boîtier et un milieu filtrant selon l'une quelconque des revendications précédentes.

14. Procédé de filtration d'un liquide, le procédé comprenant la direction du liquide à travers un élément filtrant selon la revendication 13.
